# FASCICULE DE BREVET EUROPEEN

(11) **EP 0 459 323 B1**
(45) Date de publication et mention de la délivrance du brevet: **20.07.1994**
(21) Numéro de dépôt: 91108488.7
(22) Date de dépôt: 24.05.1991
(51) Int. Cl.: A47J 31/06

(54) **Porte-filtre pour machine à café du type "espresso"**
Brühkopf für Espresso-Kaffemaschinen
Percolator holder for espresso coffee making machines

(30) Priorité: 30.05.1990 FR 9006734
(43) Date de publication de la demande: 04.12.1991
(73) Titulaire: MOULINEX, F-93170 Bagnolet (FR)
(72) Inventeur: Schiettecatte, Patrice Jean Cornelius, F-61000 Alençon (FR)
(74) Mandataire: May, Hans Ulrich, Dr.

(56) Documents cités:
- EP-A- 0 264 352
- DE-A- 3 035 157
- FR-A- 1 367 182
- FR-A- 2 636 828

## Description

L'invention se rapporte à un porte-filtre destiné à être monté sur une machine à café du type "espresso" et comprenant une coupelle de réception d'un filtre en forme de bol qui est destiné à contenir une dose de mouture de café et dont le fond est perforé, et une chambre collectrice d'infusion située sous le fond dudit filtre et comportant un couloir de sortie de l'infusion dont le débouché communique avec un entonnoir de distribution permettant à l'infusion de s'écouler hors de ladite coupelle. Voir DE-A-3 035 157.

Dans les cafetières "espresso" actuelles, l'eau chaude est amenée sur la mouture de café contenu dans le filtre à une pression de 10 à 15 bars. En traversant cette mouture, la pression de l'eau diminue pour arriver à la pression atmosphérique en sortie du filtre. La mousse qui apparaît alors sur le café est due principalement à la détente, dans l'infusion sortant du filtre, de bulles d'air qui étaient comprimées dans le circuit d'eau de la cafetière et dans la mouture de café. De ce fait cette mousse est produite en faible quantité.

L'invention a notamment pour but d'améliorer la production de mousse.

Selon une caractéristique principale, le porte-filtre est équipé d'un dispositif de confection de mousse comprenant une lame flexible disposée transversalement au débouché du couloir dont une extrémité est ancrée sur un pied solidaire de la paroi de fond de la chambre, et dont l'autre extrémité, dite libre, est appliquée avec une force prédéterminée contre ledit débouché de manière à obtenir un jet laminaire d'infusion uniquement lorsque la pression dans la chambre est supérieure à la force d'application de l'extrémité libre de la lame contre le débouché, ainsi qu'une cloison agencée autour de la lame et s'étendant vers le bas de sorte que le jet d'infusion vienne se pulvériser sur la cloison en formant de la mousse.

Grâce à ce dispositif de confection de mousse, on obtient, par effet venturi, au niveau de la lame et par fractionnement contre la paroi, un mélange air-infusion suffisamment important pour créer une mousse épaisse dans le café recueilli.

L'invention a également pour but de réaliser une mousse enrichie par une substance alimentaire telle que le chocolat.

Selon un autre mode de réalisation de l'invention, le fond de la coupelle étant perforé de manière à constituer le couloir de sortie de l'infusion, la lame flexible est ancrée directement sur la face externe du fond de la coupelle, tandis que la cloison est constituée par la surface interne périphérique de l'entonnoir ménageant ainsi un logement pour une substance alimentaire, ledit entonnoir étant à cet effet monté amovible sur la face externe du fond de la coupelle au moyen d'un dispositif de fixation amovible.

Grâce à cette réalisation, le jet d'infusion vient frapper également le morceau ou la poudre de chocolat contenue dans le logement. Ainsi, le chocolat fond progressivement et provoque une mousse encore plus abondante, ce qui rend le café plus mousseux et d'un goût très agréable.

Les caractéristiques et avantages de l'invention ressortiront d'ailleurs de la description qui va suivre, à titre d'exemple, en référence au dessin annexé dans lequel :

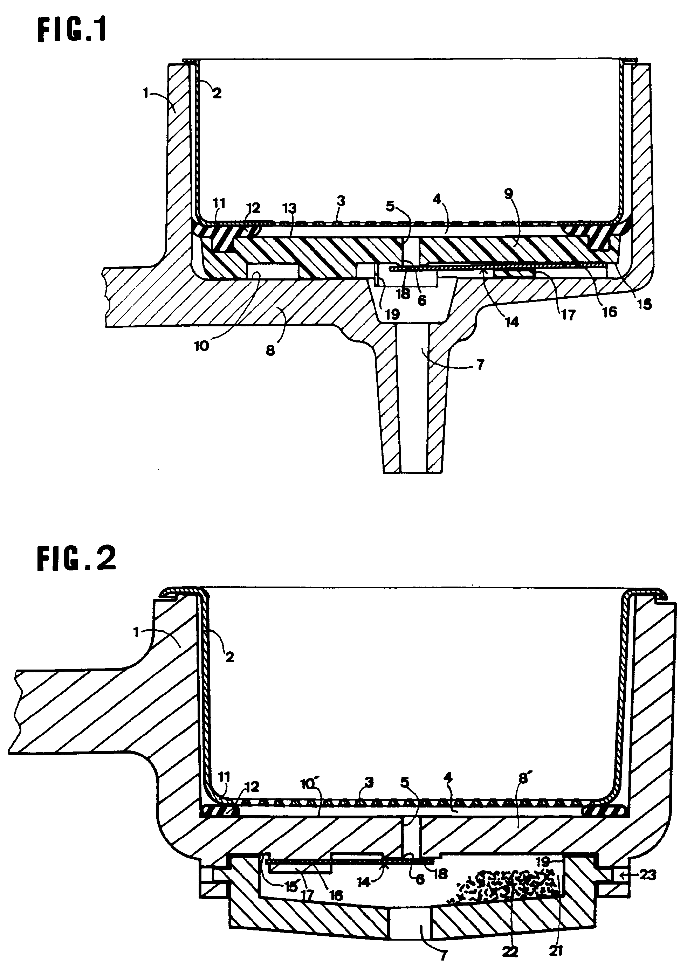

la figure 1 est une coupe verticale d'un porte-filtre selon l'invention ; la figure 2 est une coupe verticale d'un porte-filtre selon l'invention dans un second mode de réalisation.

Le porte-filtre représenté aux figures 1 et 2 est destiné à être monté sur une machine à café du type "espresso" et comprend, de façon connue en soi, une coupelle 1 de réception d'un filtre 2 en forme de bol qui est destiné à contenir une dose de mouture de café et dont le fond 3 est perforé, et une chambre 4 collectrice d'infusion située sous le fond 3 et comportant un couloir 5 de sortie de l'infusion dont le débouché 6 communique avec un entonnoir 7 de distribution s'étendant vers le bas à partir du fond 8,8′ de la coupelle et permettant à l'infusion recueillie de s'écouler, hors de ladite coupelle, dans une tasse à café généralement placée en dessous.

Selon une première réalisation (figure 1), le porte-filtre présente dans le fond 8 de la coupelle un conduit central formant l'entonnoir 7 de distribution et est équipé d'une plaquette 9 réalisée en matériau plastique qui est perforée en son centre pour former le couloir 5 de sortie et qui est agencée entre le fond 3 du filtre 2 et la face interne 10 du fond 8 de la coupelle 1, ladite plaquette 9 constituant la paroi de fond de la chambre 4 collectrice d'infusion.

Le fond perforé 3 du filtre 2 vient reposer par sa périphérie 11 sur un organe d'étanchéité annulaire 12, tel qu'un joint en silicone, qui est disposé sur la face supérieure 13 de la plaquette 9 et dont l'épaisseur délimite ainsi la hauteur de ladite chambre.

Le porte-filtre est équipé d'un dispositif de confection de mousse comprenant une lame flexible 14, disposée sous la paroi de fond transversalement au débouché 6 du couloir 5, dont une extrémité 16 est ancrée sur un pied 17 solidaire de la face inférieure 15 de la paroi de fond de la chambre 4 et dont l'autre extrémité 18, dite libre, est appliquée avec une force prédéterminée contre le débouché 6, ainsi qu'une cloison 19 agencée autour de la lame 14 et s'étendant vers le bas.

Ainsi, lorsque la pression du liquide dans la chambre 4 vient à être supérieure à la force d'application de l'extrémité libre 18 contre le débouché 6, il se produit alors un jet laminaire d'infusion qui vient se pulvériser sur la cloison 19, située de préférence à proximité de la lame, en formant de la mousse qui s'écoule ensuite par l'entonnoir 7. On comprendra que cette mousse est plus ou moins importante, non seulement, en fonction de la distance à laquelle est implantée la cloison 19 par rapport au débouché 6, mais aussi, en fonction de la force d'application qui permet au jet laminaire d'entraîner avec lui, tout au moins dans la direction longitudinale de la lame 14, par effet venturi, plus ou moins d'air, capté latéralement.

La figure 2 illustre un second mode de réalisation de l'invention dans lequel, pour plus de clarté, on a donné aux éléments semblables à ceux de la figure 1, les mêmes références. Comme représenté, la coupelle 1 contient un filtre 2 qui vient reposer sur un joint annulaire 12 disposé directement sur la face interne 10′ du fond 8′ de la coupelle 1. Le fond 8′ de la coupelle 1 constitue la paroi de fond de la chambre 4 et est perforé de manière à constituer le couloir 5 de sortie d'infusion, et la lame flexible 14 est ancrée sur un pied 17 solidaire de la face inférieure 15′ dudit fond 8′, tandis que la cloison 19 est constituée par la surface interne périphérique de l'entonnoir 7 ménageant ainsi un logement 21 pour une substance alimentaire 22 telle que par exemple, du chocolat en morceau ou en poudre, ledit entonnoir étant à cet effet monté amovible sur la face inférieure 15′ du fond 8′ au moyen d'un dispositif de fixation amovible du type à baïonnette représenté en 23.

Comme on le comprendra, l'utilisateur ayant enlevé l'entonnoir 7 de la coupelle 1, place par exemple un morceau de chocolat 22 dans le logement 21. Puis il monte l'entonnoir 7 sur la coupelle 1 au moyen de la fixation à baïonnette 23. Dès que l'extrémité libre 18 de la lame 14 laisse échapper un jet d'infusion laminaire du débouché 6, ce dernier vient frapper , non seulement la paroi 19, mais aussi le morceau de chocolat, provoquant sa fusion progressive et une émulsion infusion-chocolat qui permet d'obtenir une mousse abondante et un café à goût très agréable.

## Revendications

1. Porte-filtre destiné à être monté sur une machine à café du type "espresso" et comprenant une coupelle (1) de réception d'un filtre (2) en forme de bol qui est destiné à contenir une dose de mouture de café et dont le fond (3) est perforé, et une chambre (4) collectrice d'infusion située sous le fond (3) dudit filtre et comportant un couloir (5) de sortie de l'infusion dont le débouché (6) communique avec un entonnoir (7) de distribution permettant à l'infusion de s'écouler hors de ladite coupelle,
**caractérisé en ce qu'il** est équipé d'un dispositif de confection de mousse comprenant une lame flexible (14) disposée transversalement au débouché (6) du couloir (5), dont une extrémité (16) est ancrée sur un pied (17) solidaire de la paroi de fond (9,8′) de la chambre (4), et dont l'autre extrémité (18), dite libre, est appliquée avec une force prédéterminée contre ledit débouché (6) de manière à obtenir un jet laminaire d'infusion uniquement lorsque la pression dans la chambre (4) est supérieure à la force d'application de l'extrémité libre (18) de la lame contre le débouché (6), ainsi qu'une cloison (19) agencée autour de la lame (14) et s'étendant vers le bas de sorte que le jet d'infusion vienne se pulvériser sur la cloison en formant de la mousse.

2. Porte-filtre selon la revendication 1,
**caractérisé en ce que** le fond perforé (3) du filtre vient reposer par sa périphérie sur un organe d'étanchéité annulaire (12) qui est disposé sur la face supérieure (13,10′) de la paroi de fond de la chambre collectrice (4) et dont l'épaisseur délimite ainsi la hauteur de ladite chambre.

3. Porte-filtre selon la revendication 2,
**caractérisé en ce que,** le fond (8) de la coupelle (1) présentant un conduit central formant l'entonnoir (7) de distribution, il est équipé d'une plaquette (9) qui est perforée en son centre pour former le couloir de sortie (5) et qui est agencée entre le fond (3) du filtre (2) et la face interne (10) du fond (8) de la coupelle (1), ladite plaquette (9) portant sur sa face supérieure (13) l'organe d'étanchéité (12), et sur sa face inférieure (15) la lame flexible (14) et la cloison (19).

4. Porte-filtre selon la revendication 2,
**caractérisé en ce que** le fond (8′) de la coupelle (1) formant la paroi de fond de la chambre collectrice (4) et étant perforé de manière à constituer le couloir (5) de sortie de l'infusion, la lame flexible (14) est ancrée sur un pied (17) solidaire de la face inférieure (15′) du fond (8′) de la coupelle, tandis que la cloison (19) est constituée par la surface interne périphérique de l'entonnoir (7) ménageant ainsi un logement (21) pour une substance alimentaire (22), ledit entonnoir (7) étant à cet effet monté amovible sur la face inférieure du fond (8′) de la coupelle au moyen d'un dispositif de fixation amovible (23).

## Patentansprüche

1. Filterhalter zum Anbringen an einer "Espresso"-Kaffeemaschine, der eine Schale (1) zur Aufnamhe eines becherförmigen Filters (2), in das eine Dosis von Kaffeemehl eingefüllt werden soll und dessen Boden (3) gelocht ist, und eine unter dem Boden (3) des Filters angeordnete Auffangkammer (4) für den Kaffee (die Infusion) mit einem Auslaufkanal (5) für den Kaffee aufweist, dessen Mündung (6) mit einem Verteiltrichter (7) in Verbindung steht, der den Ablauf des Kaffees aus der Schale ermöglicht, **dadurch gekennzeichnet,** daß er mit einer Schaumerzeugungsvorrichtung ausgerüstet ist, die eine quer zur Mündung (6) des Auslaufkanals (5) angeordnete biegsame Zunge (14) aufweist, von der ein Ende (16) an einem mit der Bodenwand (9, 8′) der Kammer (4) fest verbundenen Fuß (17) verankert ist und von der das andere sogenannte freie Ende (18) mit einer vorbestimmten Kraft gegen die Mündung (6) angedrückt ist, um so einen laminaren Kaffeestrahl nur dann zu erhalten, wenn der Druck in der Kammer (4) größer ist als die Andruckkraft mit der das freie Ende (18) der Zunge gegen die Mündung (6) gedrückt wird, sowie eine rings um die Zunge (14) angeordnete Wand (19) aufweist, die sich nach unten erstreckt, so daß der Kaffeestrahl an dieser Wand unter Schaumbildung zerstäubt.

2. Filterhalter nach Anspruch 1, **dadurch gekennzeichnet,** daß der gelochte Boden (3) des Filters mit seinem Rand auf einem ringförmigen Dichtungselement (12) ruht, das auf der Oberseite (13, 10′) der Bodenwand der Auffangkammer (4) angeordnet ist, und dessen Dicke die Höhe der Kammer bestimmt.

3. Filterhalter nach Anspruch 2, **dadurch gekennzeichnet,** daß der Boden (8) der Schale (1) eine Mittelöffnung aufweist, welche den Verteiltrichter (7) bildet, und daß der Filterhalter mit einer Platte (9) ausgerüstet ist, die in ihrer Mitte gelocht ist, um den Auslaufkanal (5) zu bilden und die zwischen dem Boden (3) des Filters (2) und der Innenseite (10) des Bodens (8) der Schale (1) angeordnet ist, wobei diese Platte (9) an ihrer Oberseite (13) das Dichtungselement (12) und an ihrer Unterseite (15) die biegsame Zunge (14) und die Wand (19) trägt.

4. Filterhalter nach Anspruch 2, **dadurch gekennzeichnet,** daß der Boden (8′) der Schale (1) die Bodenwand der Auffangkammer (4) bildet und so gelocht ist, daß er den Auslaufkanal (5) für den Kaffee (die Infusion) bildet, und daß die biegsame Zunge (14) an einem mit der Unterseite (15′) des Bodens (8′) der Schale fest verbundenen Fuß (17) verankert ist, während die Wand (19) von der inneren Umfangsfläche des Trichters (7) gebildet wird, der so einen Aufnahmeraum (21) für eine Lebensmittelsubstanz(22) bildet, wobei der Trichter (7) zu diesem Zweck an der Unterseite des Bodens (8′) der Schale mittels einer Vorrichtung zur abnehmbaren Befestigung (23) abnehmbar befestigt ist.

## Claims

1. A filter carrier intended to be mounted on an "Espresso" type coffee machine and comprising a basket (1) for a filter (2) in the form of a bowl which is intended to contain a measure of ground coffee and the base (3) of which is perforated, and an infusion collecting chamber (4) situated beneath the base (3) of said filter and comprising an infusion outlet channel (5), the outlet (6) of which communicates with a distributing funnel (7) enabling the infusion to flow out of said basket,
**characterised in that** it is equipped with a froth-producing device comprising a flexible blade (14) disposed transversally to the outlet (6) of the channel (5), one end (16) of which is anchored to a foot (17) integral with the bottom wall (9, 8′) of the chamber (4), and the other end (18), known as the free end, of which is applied with a predetermined force against said outlet (6) so as to obtain a laminar infusion jet only when the pressure in the chamber (4) is greater than the application force of the free end (18) of the blade against the outlet (6), and also a partition (19) disposed around the blade (14) and extending downwards so that the infusion jet comes to be pulverised on the partition whilst forming froth.

2. A filter carrier according to Claim 1,
**characterised in that** the perforated base (3) of the filter comes to rest with its periphery on an annular sealing element (12) which is disposed on the upper face (13, 10′) of the bottom wall of the collecting chamber (4) and the thickness of which thus delimits the height of said chamber.

3. A filter carrier according to Claim 2,
**characterised in that**, as the base (8) of the basket (1) has a central duct forming the distributing funnel (7), it is equipped with a plate (9) which is perforated in its centre in order to form the outlet channel (5) and which is disposed between the base (3) of the filter (2) and the inner face (10) of the base (8) of the basket (1), the said plate (9) bearing on its upper face (13) the sealing element (12), and on its lower face (15) the flexible blade (14) and the partition (19).

4. A filter carrier according to Claim 2,
**characterised in that** as the base (8′) of the basket (1) forms the base wall of the collecting chamber (4) and is perforated so as to form the infusion outlet channel (5), the flexible blade (14) is anchored to a foot (17) integral with the lower face (15′) of the base (8′) of the basket, whereas the partition (19) is formed by the peripheral inner surface of the funnel (7), thus providing a housing (21) for a nutritional substance (22), the said funnel (7) for this purpose being removably mounted on the lower face of the base (8′) of the basket by means of a removable attachment device (23).
